Europäisches Patentamt

(19) European Patent Office

Office européen des brevets

(11) Numéro de publication: **0 075 507
B1**

(12) **FASCICULE DE BREVET EUROPEEN**

(45) Date de publication du fascicule du brevet:
27.08.86

(51) Int. Cl.⁴: **F 15 B 21/08**, G 06 J 1/00 //
F15B9/09

(21) Numéro de dépôt: 82401652.1

(22) Date de dépôt: **10.09.82**

(54) **Dispositif à servovalve électrohydraulique.**

(30) Priorité: **11.09.81 FR 8117235**

(43) Date de publication de la demande:
**30.03.83 Bulletin 83/13**

(45) Mention de la délivrance du brevet:
**27.08.86 Bulletin 86/35**

(84) Etats contractants désignés:
**CH DE GB IT LI NL SE**

(56) Documents cités:
**DE - B - 2 305 014
FR - A - 1 332 700
US - A - 3 821 625**

**REGELUNGSTECHNISCHE PRAXIS, vol. 20, no. 2,
fevrier 1978, pages 56-60, Munich (DE); M. GLÖCKNER
et al.: "Ein digitales Totzeitgerät, auch als
Signalgenerator und Funktionsgeber verwendbar".
INSTRUMENTS AND CONTROL SYSTEMS, vol. 44, no.
10, octobre 1971, page 11, Radnor (USA); G. SHINSKY:
"When you have the wrong valve characteristic".**

(73) Titulaire: **THOMSON-CSF, 173, Boulevard Haussmann,
F-75379 Paris Cedex 08 (FR)**
Titulaire: **MOOG (SARL), 38 rue du Morvan,
F-94573 Rungis (FR)**

(72) Inventeur: **Contartese, Giulio, THOMSON-CSF
SCPI 173, bld Haussmann, F-75379 Paris Cedex 08 (FR)**
Inventeur: **Dietz, Joachim, THOMSON-CSF SCPI 173, bld
Haussmann, F-75379 Paris Cedex 08 (FR)**

(74) Mandataire: **Benoit, Monique et al, THOMSON-CSF
SCPI 19, avenue de Messine, F-75008 Paris (FR)**

## Description

La présente invention concerne un dispositif à servovalve électrohydraulique. D'une façon générale, une servovalve appartient à la classe d'appareils transformant une grandeur électrique, courant ou tension en une grandeur hydraulique correspondante c'est-à-dire une pression ou un débit.

Les servovalves sont utilisées principalement comme éléments d'interface entre une commande électrique et une action mécanique dans les asservissements électrohydrauliques qui depuis quelques années, d'ailleurs, sont l'objet d'un développement croissant. Les applications n'en sont plus alors limitées aux domaines de l'aéronautique ou de l'armement mais ont gagné d'autres domaines et l'on voit des asservissements électrohydrauliques sur des machines de transformation des matières plastiques entre autres.

La servovalve, à partir de l'energie brute fournie par un générateur hydraulique, restitue à un organe de puissance, moteur ou verin, une partie de celle-ci sous forme ordonnée. Le rapport entre la puissance électrique de commande et la puissance hydraulique asservie se situe couramment entre $10^4$ et $10^6$. En effet un signal électrique de quelques centièmes à quelques dixièmes de watt permet de piloter un débit d'huile de plusieurs dizaines, voire plusieurs centaines de kilowatt.

Pour un fonctionnement correct d'une boucle d'asservissement ouverte ou fermée comportant une servovalve, il est d'habitude souhaitable que la reponse caractéristique de la servovalve soit aussi linéaire que possible. En même temps, comme pour tout autre composant, on cherche à augmenter les performances, rapidité de réponse, puissance à la sortie, finesse de commande autour du point zéro... tout en réduisant les charges telles que pertes d'énergie, encombrement et prix de revient.

Jusqu'à présent, la linéarité et les autres qualités sont assurées par la mise en œuvre de techniques de fabrication de très haute qualité, voire près des limites réalisables actuellement. Ceci entraîne des coûts élevés et une réelle difficulté à obtenir de façon fiable une bonne courbe de réponse pour la servovalve.

D'autre part, le brevet US-A-3 821 625 décrit un dispositif de servovalve électrohydraulique comportant une boucle d'asservissement électronique. Ce dispositif à servovalve ne permet de corriger qu'une fraction bien définie autour de zéro de la courbe de réponse réelle par rapport à la courbe désirée.

Par contre, le dispositif objet de la présente invention permet de corriger la totalité de la courbe de réponse réelle par rapport à la courbe désirée.

Le but de la présente invention est d'assurer le rapport voulu entre le signal de commande et l'action qui s'en suit, tout en échappant aux inconvénients signalés. En particulier on utilisera des moyens qui ne font pas nécessairement appel auxdites techniques de fabrication de très haute précision.

Suivant la présente invention, un dispositif à servovalve électrohydraulique dans lequel la servovalve a une entrée électrique destinée à recevoir une grandeur électrique de commande et une sortie hydraulique délivrant une grandeur hydraulique correspondant à la grandeur électrique de commande et dont la courbe de réponse réelle grandeur hydraulique en fonction de la grandeur électrique présente un certain écart avec une courbe de réponse idéale désirée, le dispositif comportant des moyens électroniques adaptés à la courbe de réponse réelle et connectés entre une entrée de commande du dispositif et l'entrée électrique proprement dite de la servovalve, lesdits moyens électroniques élaborant une grandeur électrique corrigée de sortie fonction, d'une part, d'un signal d'entrée et d'autre part de ladite courbe de réponse réelle, ladite courbe de réponse réelle étant déterminée par des actions sur certaines caractéristiques mécaniques de la servovalve telle que la courbe de réponse globale grandeur hydraulique en fonction du signal de commande électrique se rapproche sensiblement de la réponse idéale désirée, est caractérisé par le fait que les moyens électroniques comportent des moyens de mémorisation permettant de stocker les valeurs désirées de la grandeur hydraulique de sortie correspondant aux valeurs de la grandeur électrique de commande.

Ainsi dans le cas où la réponse désirée est plus généralement une réponse linéaire globale, la courbe de réponse de la servovalve sur laquelle le dispositif électronique doit agir peut être exponentielle.

Suivant une autre caractéristique de l'invention, les lumières de commande de passage d'huile dans la servovalve sont dotées d'une forme s'écartant de la forme rectangulaire classique, entraînant outre la commande globale linéaire désirée, une action exponentielle en fonction du déplacement du tiroir de la servovalve.

Les avantages que l'on peut tirer de l'invention sont en particulier qu'à caractéristiques égales celle-ci permet une fabrication de servovalves de performances supérieures.

D'autres avantages et caractéristiques de l'invention apparaîtront dans la description qui suit d'un exemple de réalisation non limitatif donné à l'aide des figures qui représentent:

— la figure 1, un schéma de principe d'une boucle d'asservissement fermée;

— la figure 2, une courbe de réponse idéale constituant la réponse désirée ainsi qu'une courbe réelle avec des défauts, exagérés, obtenue avec un dispositif de l'art antérieur;

— la figure 3, un diagramme schématique d'une réalisation préférée simple des moyens électroniques sous la forme d'un circuit électronique d'adaptation;

— la figure 4, un diagramme schématique d'un perfectionnement de la figure 3;

— la figure 5, la confection d'une mémoire pour le circuit électronique d'adaptation;

– la figure 6, une coupe à travers une servovalve; et

– la figure 7, un plan d'une lumière non-rectangulaire.

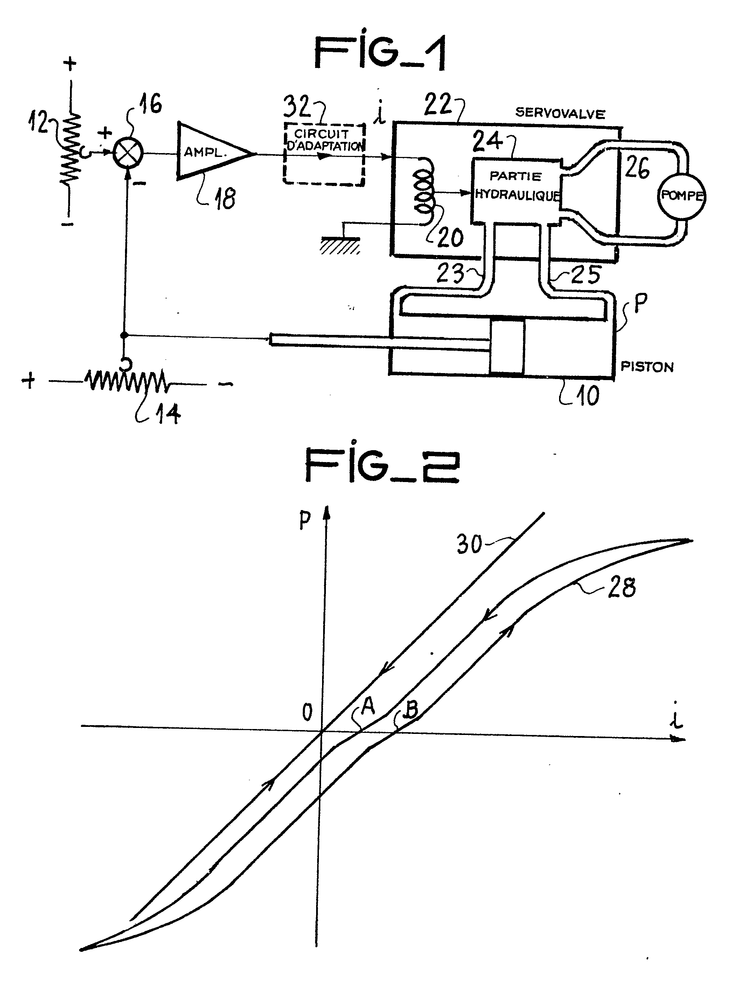

La figure 1 représente le schéma de principe d'un système simple asservi en boucle fermée. La position d'un piston 10 est commandée à partir d'une commande 12. Cette position est détectée par un capteur de position 14 et la différence entre les deux grandeurs électriques engendrées par la commande 12 et le capteur 14 est établie par un soustracteur 16. Cette différence est amplifiée par un amplificateur 18 et elle est ensuite appliquée à une bobine de commande 20 d'une servovalve 22. La partie hydraulique 24 de cette dernière reçoit d'une pompe 26, du fluide hydraulique sous pression, et elle distribue la pression hydraulique vers l'une ou l'autre des faces du piston 10 par les conduits 23, 25 selon le signe de ladite différence, et dans des proportions qui sont liées a sa grandeur.

La figure 2 montre la relation qui s'établit entre la grandeur électrique i appliquée sur l'entrée de la bobine 20 et la grandeur hydraulique p qui en résulte. La courbe de réponse 28 est obtenue avec un dispositif à servovalve de l'art antérieur avec toutefois les défauts représentés de façon exagérée pour clarifier le dessin, tandis que la courbe 30, une droite passant par l'origine, représente une courbe de réponse souhaitée à obtenir précisément avec le dispositif suivant l'invention. L'analyse de la courbe 28 met en valeur notamment les défauts du zéro mal placé, points A et B, du gain qui varie autour du zéro, du gain qui varie près des limites maximales et de l'hystérésis.

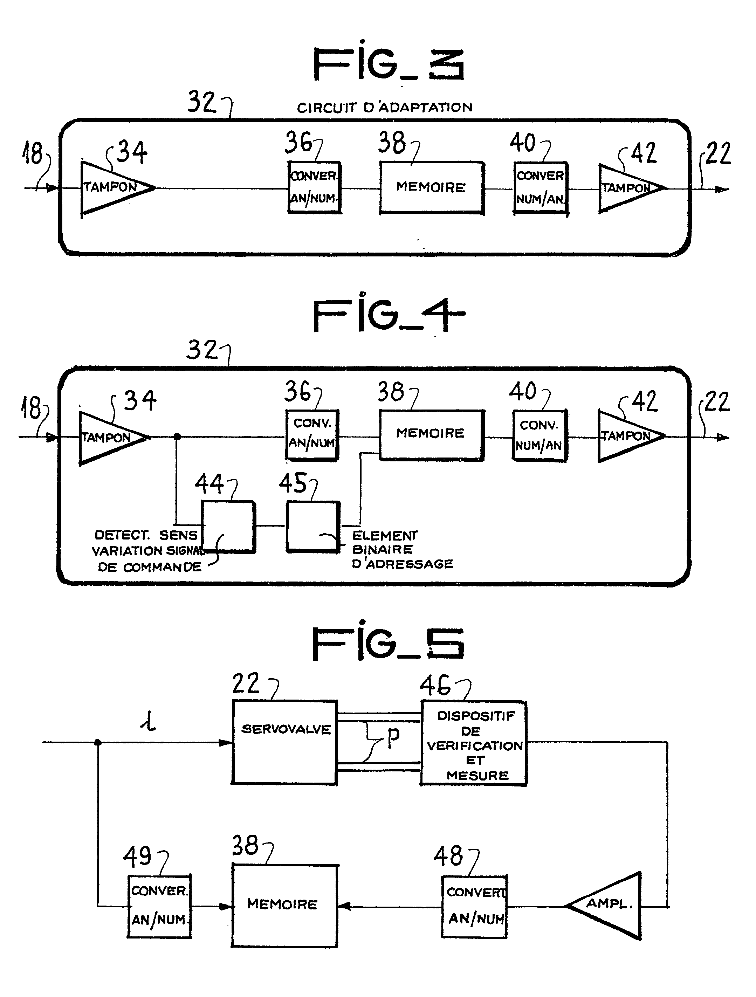

Selon l'invention, on pallie ces défauts en intercalant un circuit électronique dit d'adaptation 32 représenté en pointillé sur la figure 1, entre la sortie de l'amplificateur 18 et l'entrée du signal de commande électrique de la servovalve 22. Ce circuit électrique d'adaptation 32, plus détaillé figure 3, comporte un amplificateur tampon d'entrée 34, un convertisseur analogique-numérique 36, une mémoire 38, un convertisseur numérique-analogique 40 et un amplificateur tampon de sortie 42. La mémoire 38 détient, pour chaque valeur pouvant être admise comme signal d'entrée, la valeur correspondante qui entraînera la grandeur hydraulique de sortie voulue de la servovalve. Pour effectuer cette transformation, le signal d'entrée sert à adresser la mémoire, et la valeur mémorisée à cette adresse correspond bien à la valeur d'entrée.

Les deux convertisseurs 36 et 40 utilisent avantageusement une certaine quantité d'éléments en commun utilisable en temps partagé. Ceci est possible grâce a une fréquence maximale de conversion électrique de l'ordre d'une dizaine de kilohertz qui dépasse de loin la fréquence de réponse maximale hydraulique qui se situe dans la centaine de hertz.

Pour obtenir une meilleure approximation avec la courbe de réponse idéale on introduit dans la mémoire deux jeux de valeurs, l'un correspondant à la partie montante de la courbe 28 et l'autre correspondant à la partie descendante. Dans ce cas, la figure 3 est modifiée suivant la représentation de la figure 4 dans laquelle on a incorporé un dispositif 44 de détection du sens de variation du signal de commande, et ajouté un élément binaire d'adressage supplémentaire 45. Par exemple, l'élément binaire de poids fort indiquerait le sens montant pour sa valeur logique un et le sens descendant pour sa valeur logique zéro.

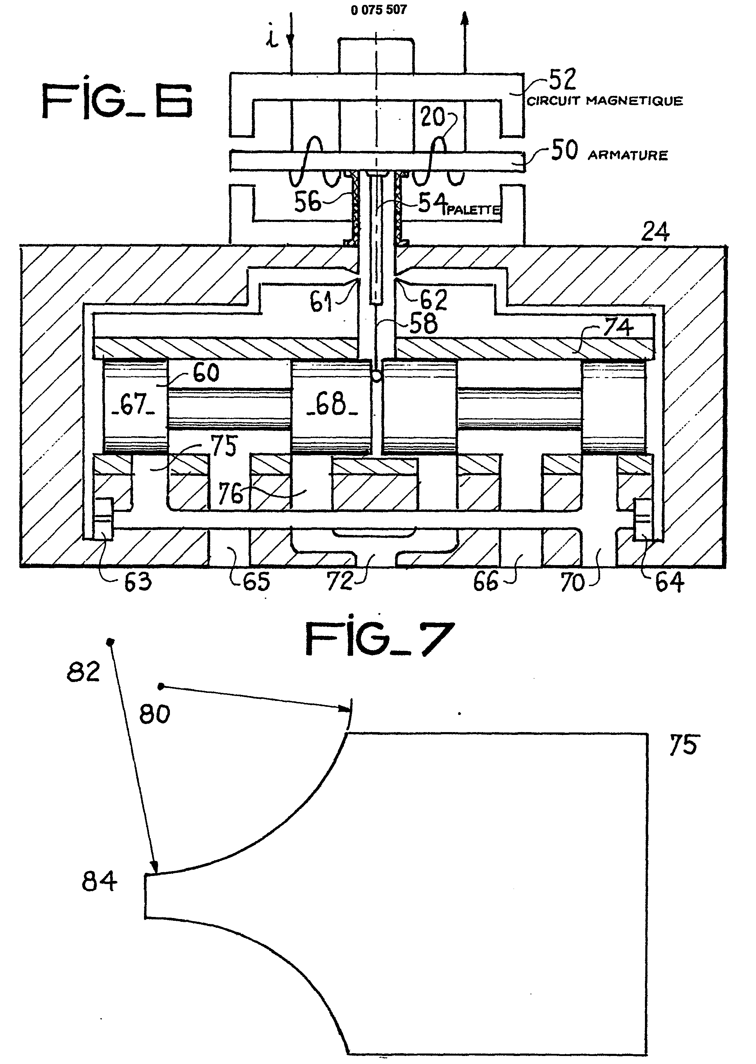

De façon générale chaque mémoire est adaptée à sa propre servovalve vers la fin de la fabrication de celle-ci. Pour obtenir une réponse linéaire, l'opération est réalisée de la façon suivante décrite à l'aide de la figure 5. Une nouvelle servovalve 22 est installée dans un dispositif de vérification et de mesure 46. Une grandeur électrique de commande i est appliquée à la servovalve 22, et la grandeur hydraulique p qui en résulte est mesurée. Après conversion adéquate en signal numérique dans un convertisseur analogique-numérique 48, la grandeur p adresse la mémoire 38, tandis que la grandeur électrique de commande, également après conversion adéquate en numérique dans un convertisseur 49, est inscrite dans la mémoire qui travaille alors en mode écriture. La grandeur électrique i est modifiée de manière que la grandeur hydraulique p marque chaque adresse disponible à la résolution utilisée. Des mémoires mortes programmables (PROM) sont utilisées. A l'emploi, un signal de commande proportionnel a la grandeur hydraulique voulue p est utilisé pour adresser la mémoire 38 qui rend donc automatiquement la grandeur électrique i requise pour l'obtenir.

Dans une première utilisation générale, le circuit électronique d'adaptation, partie à l'invention, sert à réduire les défauts de fabrication mais suivant l'invention il peut fournir d'autres possibilités intéressantes et de la simple correction des défauts de fabrication arriver à une linéarisation d'un appareil à servovalve à loi de distribution non linéaire. Suivant l'invention, on agit sur certaines caractéristiques propres de la servovalve pour obtenir une courbe de réponse qui, traitée dans le circuit électronique d'adaptation décrit ci-dessus permet d'obtenir outre une linéarisation globale d'un dispositif, d'autres qualités souhaitables pour ce dispositif.

On peut ainsi citer:
– la réduction du «plat moteur» d'un moteur hydraulique piloté par la servovalve;
– la réduction des fuites hydrauliques de la servovalve;
– la réduction de la dérive intrinseque due au distributeur seul;
– l'amélioration de la régularité des basses vitesses du servo-moteur;
– l'amélioration de la capacité de la servovalve à répondre à un signal de commande plus faible et la possibilité d'avoir des performances de réponses à la demande;
– la possibilité d'élargir les tolérances de fabrication de la servovalve pour une linéarité donnée, ou inversement de linéariser la servovalve avec des tolérances imposées supérieures à celles possibles sans le circuit d'adaptation;

– la diminution des effets de l'érosion.

Pour mieux comprendre comment obtenir, suivant l'invention, ces résultats, on rappelle schématiquement le fonctionnement d'une servovalve type, en se référant à la figure 6. La bobine 20 entoure une armature 50, l'ensemble bobine-armature étant logé dans un circuit magnétique 52. Un courant électrique i passant dans la bobine 20 crée un couple qui a tendance à faire basculer l'armature 50. Cette action entraîne une palette 54 qui est solidaire de l'armature, mais qui se trouve plongée dans un circuit d'huile. La possibilité de déplacer la palette 54 est assurée par un tube flexible 56 qui l'entoure et qui réalise l'étanchéité entre le circuit d'huile et le circuit électrique. La palette 54 est prolongée par un ressort de rétroaction 58 dont l'extrémité s'engage dans un tiroir 60.

La palette 54 est placée entre deux buses 61 et 62 qui sont alimentées en huile sous pression à travers deux orifices calibrés 63 et 64. L'huile arrive dans le corps 24 de la servovalve par une entrée pression 70, et elle est refoulée par une sortie retour 72. Quand la palette 54 se déplace vers l'une des buses 62 par exemple, elle s'éloigne en même temps de l'autre, entraînant un débit d'huile supérieur à travers la buse 61 dont elle s'éloigne par rapport au débit à travers la buse 62 dont elle se rapproche. Il en résulte que la pression augmente derrière la buse approchée 62 et qu'elle diminue derrière l'autre buse 61; le tiroir 60 est donc soumis à une pression différentielle. Quand le tiroir 60 se déplace sous l'action de cette pression il entraîne le ressort de rétroaction 58, créant un couple venant s'opposer au couple électromagnétique initial. Au point d'équilibre de ces couples la palette 54 est à nouveau centrée entre les deux buses 61 et 62, et le tiroir s'immobilise dans une position déterminée par la grandeur du couple électromagnétique initial.

Le tiroir 60 est logé dans une fourrure 74 qui est munie de diverses lumières 75, 76 qui sont progressivement découvertes par des pistons 67, 68 qui font partie du tiroir 60. Selon la direction de déplacement du tiroir 60 les lumières sont mises en relation soit avec l'entrée pression 70, soit avec la sortie retour 72. Les lumières commandent un débit d'huile à travers deux orifices d'utilisation 65 et 66.

Il y a donc deux effets: un couple électromagnétique se traduit en déplacement du tiroir et la position du tiroir détermine la proportion découverte de lumières, commandant le débit d'huile qui y passe.

Actuellement, en général, les fourrures des servovalves présentent des lumières rectangulaires entraînant des lois de débit linéaire. Autour des débits faibles, les paramètres jouant un rôle dans la réponse de la servovalve sont l'ajustement axial et radial du tiroir dans la fourrure et plus précisément les zones de recouvrement et de découvrement autour du point neutre. Diverses fuites ajoutent en plus un «bruit» de fond. Les performances dépendent essentiellement de la précision d'usinage de la servovalve et de ses réglages au banc d'essai.

Il est en pratique très difficile d'obtenir des résultats optimaux autour du zéro; l'amélioration d'un paramètre entraînant nécessairement la détérioration d'un autre. Par exemple, l'amélioration de la précision de la coupe au zéro par augmentation de la course du tiroir entraîne une dégradation des performances dynamiques.

Cependant, suivant les enseignements de l'invention, une modification de la forme des lumières, en association avec le circuit électronique d'adaptation permet d'obtenir outre la linéarisation recherchée du dispositif, une meilleure précision de la coupe au zéro. Pour ce faire la forme de la lumière s'écarte de la forme classique habituelle rectangulaire.

La figure 7 montre un plan d'une telle lumière 75 non-rectangulaire. Côté attaque 84 elle a une section très fine de l'ordre de quelques centièmes de millimètre, puis elle s'élargit progressivement vers une partie classiquement rectangulaire. Idéalement la courbe serait exponentielle, mais pour la commodité de fabrication, elle est tracée en deux cercles ayant des centres 80, 82 et une tangente commune vers la mi-chemin entre la pointe 84 et la partie rectangulaire 75. Pour percer des telles lumières dans la fourrure, on utilise un procédé d'électro-érosion avec un jeu d'électrodes qui approchent successivement la forme souhaitée. Avec cette forme, telle que montrée figure 7, ou une forme avoisinante, on remarque que la première partie de la lumière à se trouver découverte, 84, donne une commande plus fine autour du zéro en même temps qu'une bonne réponse dynamique, c'est-à-dire que la section des lumières croissant avec la direction de déplacement du tiroir, des déplacements égaux de grandeur fixe autour du zéro commandant des débits d'huile de volume inférieur à ceux qui seraient commandés loin du zéro.

La description qui précède permet de mieux appréhender les effets remarquables que l'invention procure, effets qui ont été cités plus haut. Ainsi la réduction du plat moteur. On sait que suivant l'art antérieur quel que soit le moteur hydraulique utilisé avec une Servovalve Débit on ne peut déterminer la pression dans les orifices d'utilisation 65, 66 (Fig. 6) lorsque le tiroir 68 est face à la lumière 75, 76, position appelée «Autour du Zéro». Cette pression de fait est liée au niveau des fuites hydrauliques dépendant des précisions d'usinage et des états de surface de l'ensemble tiroir-fourrure: précision sur le diamètre du tiroir, précision sur le diamètre de l'alésage de la fourrure, tolérance fonctionnelle sur l'ajustement tiroit-fourrure, précision sur la position de l'arête longitudinale du tiroir face à l'arête de la fourrure-appelée «Coupe au Zéro».

Actuellement pour avoir une réduction du «Plat Moteur» il faut obtenir des recouvrements ou des découvrements des arêtes de lumières faces aux arêtes de tiroirs sur les orifices pression 70 et retour 72. Le recouvrement sur l'orifice retour 72 et le découvrement sur l'orifice pression 70 provoquent une pression très élevée dans les orifices d'utilisation 65, 66. A l'inverse, le découvrement sur l'orifice retour 72 et le recouvrement sur l'orifice pression 70 provoquent une pression très faible.

Selon les types de moteur hydraulique la pression d'utilisation est soit faible soit élevée. Si la pression est élevée les frottements internes du moteur seront élevés et dépendants des caractéristiques de construction mécanique du moteur (tolerances de Fabrication, déformation des éléments de construction etc...) Une certaine pression initiale, pour provoquer la rotation du moteur est donc nécessaire pour «décoller» les organes en mouvement.

Cette pression initiale, appelée «Pression de décollage» ou «Stick-slip» suivant la terminologie anglo-saxonne doit vaincre des forces de frottement des pièces entre elles, et permettre au moteur de tourner, en répondant plus rapidement au signal électrique de commande de la servovalve. En effet, le moteur ne peut pas tourner avant décollement de ses organes. Par contre suivant l'invention cette période transitoire ou de décollement des organes n'est pas assuré, ou plat moteur, est réduite, résultat de la réduction de l'influence des frottements et il y a amélioration du contrôle de la pression autour du zéro. Influant de la sorte sur la pression de décollage, on maîtrise mieux le moteur à basse vitesse.

Les fuites hydrauliques sont réduites parce que la section des lumières autour du zéro, arêtes Tiroir-Lumière face à face, est considérablement diminuée.

La réduction de la dérive intrinsèque due au distributeur seul résulte de ce que selon l'invention le tiroir a nécessairement une course plus importante pour un même débit dans l'art connu. Donc un mauvais positionnement du tiroir influe moins sur les dérives des caractéristiques de la Servo-valve, puisque sa course est plus élevée autour du zéro.

Concernant l'amélioration de la régularité des basse vitesses du servomoteur, on notera qu'avec les servovalves classiques, l'instabilité du tiroir provoque une instabilité des pressions et débits autour du zéro et provoque donc des irrégularités sur la vitesse du moteur. Selon l'invention, on domine beaucoup mieux le gain en pression donc les variations de pression et de débit autour du zéro et par conséquent le mouvement est plus stable et régulier aux basses vitesses.

L'amélioration de la capacité de la servovalve a répondre à un signal de commande plus faible et la possibilité d'avoir des performances de réponse à la demande, capacité appelée «résolution» est obtenue autour du zéro c'est-à-dire pour un faible signal électrique car la course du tiroir est plus importante pour maîtriser les faibles débits. Les performances de réponse peuvent être à la demande puisqu'elles peuvent être établies selon la ou les lois du signal de commande électrique associé ou non aux lois des formes des lumières 75, 76.

La possibilité d'élargir les tolérances de fabrication de la servovalve pour une linéarité donnée, résulte du fait que le circuit électronique d'adaptation permet une meilleure maîtrise des défauts des fabrications actuelles et améliore les performances des servovalves actuelles qui sont liées à la qualité et précision des fabrications et notamment de l'ensemble tiroir fourrure. A l'inverse, linéariser la servovalve avec des tolérances imposées supérieures à celles possibles sans le circuit d'adaptation est plus significatif et l'obtention d'une résolution extrême est rendue possible en associant le resserrement des tolérances de fabrication avec un circuit d'adaptation dont les performances ne sont limitées que par les possibilités techniques actuelles.

La diminution des effets de l'érosion résulte, elle, de la diminution du périmètre des arêtes du tiroir et de la fourrure en contact avec le passage de l'huile hydraulique sous pression transportant les particules érosives.

On a ainsi décrit un dispositif à servovalve électrohydraulique dont les performances sont nettement améliorées par rapport à celles de dispositifs de l'art antérieur, ce par l'introduction dans le dispositif d'un circuit électronique dit d'adaptation commandant la servovalve utilisée, associé à certaines modifications de certaines caractéristiques mécaniques de la servovalve.

**Revendications**

1. Dispositif à servovalve électrohydraulique dans lequel la servovalve (22) a une entrée électrique destinée à recevoir une grandeur électrique de commande (i) et une sortie hydraulique (23, 25; 65, 66) délivrant une grandeur hydraulique correspondant à la grandeur électrique de commande et dont la courbe de réponse réelle (28) grandeur hydraulique en fonction de la grandeur électrique présente un certain écart avec une courbe de réponse idéale désirée (30), le dispositif comportant des moyens électroniques (32) adaptés à la courbe de réponse réelle (28) et connectés entre une entrée de commande (12) du dispositif et l'entrée électrique proprement dite de la servovalve (22), lesdits moyens électroniques (32) élaborant une grandeur électrique corrigée (i) de sortie fonction, d'une part, d'un signal d'entrée et d'autre part de ladite courbe de réponse réelle (28), ladite courbe de réponse réelle (28) étant déterminée par des actions sur certaines caractéristiques mécaniques de la servovalve (22) telle que la courbe de réponse globale grandeur hydraulique en fonction du signal de commande électrique se rapproche sensiblement de la réponse idéale désirée (30), caractérisé par le fait que les moyens électroniques (32) comportent des moyens de mémorisation (38) permettant de stocker les valeurs désirées de la grandeur hydraulique de sortie correspondant aux valeurs de la grandeur électrique de commande.

2. Dispositif selon la revendication 1, caractérisé par le fait que les moyens de mémorisation comportent une mémoire numérique (38).

3. Dispositif selon la revendication 2, caractérisé par le fait que les moyens électroniques (32) comportent un amplificateur tampon (34) recevant le signal de commande, suivi successivement d'un convertisseur analogue-numérique (36), de la mémoire numérique (38), d'un convertisseur numérique-analogique (40) et d'un amplificateur tampon (42).

4. Dispositif selon la revendication 2 ou 3, caractérisé par le fait que la mémoire (38) est une mémoire programmable (PROM).

5. Dispositif selon l'une quelconque des revendications précédentes, caractérisé par le fait que les moyens électroniques (32) comportent un dispositif (44) de détection du sens de variation du signal de commande suivi d'un élément binaire d'adressage supplémentaire (42) influençant les moyens de mémorisation (38).

6. Dispositif selon l'une quelconque des revendications précédentes, caractérisé par le fait que la courbe de réponse idéale (30) est linéaire.

7. Dispositif selon l'une quelconque des revendications précédentes, caractérisé en ce que la servovalve (22) est du type à tiroir comportant des lumières (75, 76) d'une forme telle qu'elles sont progressivement découvertes lors du déplacement du tiroir (60) de la servovalve commandé par le signal électrique qui lui est appliqué et que l'incrément de surface de lumière (75, 76) découverte est fonction sensiblement exponentielle de l'incrément de déplacement du tiroir (60) de la servovalve (22).

8. Dispositif selon la revendication 7, caractérisé en ce que la fonction sensiblement exponentielle est approximée par deux arcs de cercle ayant une tangente commune sensiblement à mi-chemin du parcours exponentiel (Fig. 7).

9. Procédé de programmation de mémoire (38) programmable (PROM) pour dispositif de servovalve selon l'une quelconque des revendications 4 à 9, caractérisé par le fait que pour toute la plage d'utilisation les valeurs de commande (i) numérisées par un convertisseur analogique-numérique (49) sont inscrites en mémoire (38) aux adresses égales à la valeur de sortie hydraulique (p) de la servovalve (22) mesurées par un dispositif de vérification et de mesure (46) et numérisées par un convertisseur analogique-numérique (48).

**Claims**

1. Electrohydraulic servovalve device wherein the servovalve (22) has an electric input for receiving an electric control value (i) and a hydraulic output (23, 25; 65, 66) supplying a hydraulic value corresponding to the electric control value, and having a real response curve (28) of the hydraulic value as a function of the electric value which presents a certain deviation from an ideal desired response curve (30), the device comprising electronic means (32) adapted to the real response curve (28) and interconnected between a control input (12) of the device and the electric input proper of said servovalve (22), said electronic means (32) generating a corrected electric output value (i) as a function, on the one hand, of the input signal and, on the other hand, of said real response curve (28), said real response curve (28) being determined by actions on certain mechanic characteristics of the servovalve (22) so that the total response curve of the hydraulic value as a function of the electric control signal substantially approaches the ideal desired response (30), characterized by the fact that the electronic means (32) comprise storing means (38) permitting to store the desired values of the hydraulic output value corresponding to the values of the electric control value.

2. Device according to claim 1, characterized by the fact that the storing means comprise a digital memory (38).

3. Device according to claim 2, characterized by the fact that the electronic means (32) comprise a buffer amplifier (34) receiving the control signal, successively followed by an analog-digital converter (36), the digital memory (38), a digital-analog converter (40) and a buffer amplifier (42).

4. Device according to claims 2 or 3, characterized by the fact that the memory (38) is a programmable memory (PROM).

5. Device according to any of the preceding claims, characterized by the fact that the electronic means (32) comprise a device (44) for the detection of the variation sense of the control signal followed by an additional binary addressing element (42) acting on the storing means (38).

6. Device according to any of the preceding claims, characterized by the fact that the ideal response curve (30) is linear.

7. Device according to any of the preceding claims, characterized in that the servovalve (22) is of the gate type comprising openings (75, 76) of such shape that they are progressively uncovered during the movement of the gate (60) of the servovalve controlled by the electric signal applied thereto, and that the uncovered opening (75, 76) area increment is a substantially exponential function of the movement increment of the gate (60) of the servovalve (22).

8. Device according to claim 7, characterized in that the substantially exponential function is approached by two arcs of circle having a common tangent substantially halfway of the exponential course (Fig. 7).

9. Method of programming a programmable (PROM) memory (38) for a servovalve device according to any of claims 4 to 9, characterized by the fact that for the entire range of use the control values (i) digitalized by an analog-digital converter (49) are written into the memory (38) at the addresses equal to the hydraulic output value (p) of the servovalve (22) measured by a verification and measurement device (46) and digitalized by an analog-digital converter (48).

**Patentansprüche**

1. Vorrichtung mit elektrohydraulischem Servoventil, worin das Servoventil (22) einen elektrischen Eingang zum Empfangen einer elektrischen Steuergrösse (i) und einen hydraulischen Ausgang (23, 25; 65, 66) aufweist, der eine hydraulische Grösse abgibt, welche der elektrischen Steuergrösse entspricht und deren Ansprechkurve (28) der reellen hydraulischen Grösse als Funktion der elektrischen Grösse eine gewisse Abweichung von einer idealen gewünschten Ansprechkurve (30) aufweist, wobei die Vorrichtung elektronische Mittel (32) umfasst, die an die reelle Ansprechkurve (28) angepasst sowie zwischen einen Steuereingang (12) der Vorrichtung und den eigentlichen elektrischen Eingang des Servoventils (22) geschaltet sind, wobei die genannten elektronischen Mittel (32) eine korrigierte elektrische Ausgangsgrösse (i) erzeugen, die einerseits abhängig ist von einem Eingangssignal und andererseits von der genannten reellen Ansprechkurve (28), wobei die genannte reelle Ansprechkurve (28) durch Auswirkungen auf bestimmte mechanische Kenndaten des Servoventils (22) derart bestimmt wird, dass die globale Ansprechkurve der hydraulischen Grösse als Funktion des elektrischen Steuersignals weitgehend an das ideale gewünschte Ansprechverhalten (30) angenähert ist, dadurch gekennzeichnet, dass die elektronischen Mittel (32) Speichermittel (38) enthalten, die es gestatten, die gewünschten Werte der hydraulischen Ausgangsgrösse zu speichern, welche den Werten der elektrischen Steuergrösse entsprechen.

2. Vorrichtung nach Anspruch 1, dadurch gekennzeichnet, dass die Speichermittel einen digitalen Speicher (38) umfassen.

3. Vorrichtung nach Anspruch 2, dadurch gekennzeichnet, dass die elektronischen Mittel (32) einen Pufferverstärker (34) umfasst, welcher das Steuersignal empfängt, nacheinander gefolgt von einem Analog/Digital-Umsetzer (36), dem digitalen Speicher (38), einem Digital/Analog-Umsetzer (40) und einem Pufferverstärker (42).

4. Vorrichtung nach Anspruch 2 oder 3, dadurch gekennzeichnet, dass der Speicher (38) ein programmierbarer Speicher (PROM) ist.

5. Vorrichtung nach einem der vorstehenden Ansprüche, dadurch gekennzeichnet, dass die elektronischen Mittel (32) eine Vorrichtung (44) für die Erfassung des Änderungssinnes des Steuersignals umfassen, gefolgt von einem zusätzlichen Adressierbinärelement (42), welches die Speichermittel (38) beeinflusst.

6. Vorrichtung nach einem der vorstehenden Ansprüche, dadurch gekennzeichnet, dass die ideale Ansprechkurve (30) linear ist.

7. Vorrichtung nach einem der vorstehenden Ansprüche, dadurch gekennzeichnet, dass das Servoventil (22) vom Typ mit Schieber ist, welcher Öffnungen (75, 76) von solcher Form aufweist, dass sie progressiv bei der Bewegung des Schiebers (60) des Servoventils unter Steuerung durch das daran angelegte elektrische Signal freigegeben werden und das Inkrement der freigegebenen Öffnungsoberfläche (75, 76) im wesentlichen eine exponentielle Funktion des Bewegungsinkrements des Schiebers (60) des Servoventils (22) ist.

8. Vorrichtung nach Anspruch 7, dadurch gekennzeichnet, dass die im wesentlichen exponentielle Funktion durch zwei Kreisbögen angenähert ist, die eine gemeinsame Tangente etwa in der Mitte des exponentiellen Verlaufs (Fig. 7) aufweisen.

9. Verfahren zum Programmieren eines programmierbaren Speichers (38) für eine Servoventil-Vorrichtung nach einem der Ansprüche 4 bis 9, dadurch gekennzeichnet, dass für den gesamten Betriebsbereich die durch einen Analog/Digital-Umsetzer (49) digitalisierten Steuerwerte (i) in den Speicher (38) an den Adressen eingeschrieben werden, welche gleich dem hydraulischen Ausgangswert (p) des Servoventils (22) sind, gemessen mittels einer Prüf- und Messvorrichtung (46) und digitalisiert durch einen Analog/Digital-Umsetzer (48).

# FIG_1

# FIG_2

0 075 507

# FIG_3

32  CIRCUIT D'ADAPTATION

18 → | 34 TAMPON | → | 36 CONVER. AN/NUM. | → | 38 MEMOIRE | → | 40 CONVER. NUM/AN. | → | 42 TAMPON | → 22

# FIG_4

32

18 → | 34 TAMPON | → | 36 CONV. AN/NUM | → | 38 MEMOIRE | → | 40 CONV. NUM/AN | → | 42 TAMPON | → 22

44 — DETECT. SENS VARIATION SIGNAL DE COMMANDE

45 — ELEMENT BINAIRE D'ADRESSAGE

# FIG_5

22 SERVOVALVE — P — 46 DISPOSITIF DE VERIFICATION ET MESURE

i →

49 CONVER. AN/NUM → 38 MEMOIRE ← 48 CONVERT AN/NUM ← AMPL.

11

# FIG_6

$i$

52 CIRCUIT MAGNETIQUE

20

50 ARMATURE

56 54 PALETTE

24

61 62 58

74

60

_67_ _68_

75

76

63 65 72 66 70 64

# FIG_7

82

80

75

84